Europäisches Patentamt

European Patent Office

Office européen des brevets

(11) Publication number: **0 164 133**
A2

# EUROPEAN PATENT APPLICATION

(21) Application number: 85107076.3

(22) Date of filing: 07.06.85

(51) Int. Cl.⁴: **G 01 N 27/28**

(30) Priority: 07.06.84 JP 117348/84

(43) Date of publication of application: 11.12.85
Bulletin 85/50

(84) Designated Contracting States: DE GB

(71) Applicant: **FUJI PHOTO FILM CO., LTD.**, 210 Nakanuma
Minamiashigara-shi, Kanagawa-ken, 250-01 (JP)

(72) Inventor: **Seshimoto, Osamu, c/o Fuji Photo Film Co.,
Ltd 3-11-46 Senzui, Asaka-shi Saitama-ken (JP)**
Inventor: **Yamaguchi, Akira, c/o Fuji Photo Film Co.,
Ltd 3-11-46 Senzui, Asaka-shi Saitama-ken (JP)**

(74) Representative: **Kraus, Walter, Dr. et al, Patentanwälte
Kraus Weisert & Partner Thomas-Wimmer-Ring 15,
D-8000 München 22 (DE)**

(54) **Device for measuring ionic activity.**

(57) A device is disclosed for measuring ionic activity of ions
contained in solutions. The device comprises a lower support-
ing frame, at least one pair of ion-selective electrodes, an upper
supporting frame made of a thermoplastic material having at
least one pair of apertures for spotting reference and sample
solutions, and at least one porous bridge for effecting an elec-
trical conduction between both solutions. Both ends of the
porous bridge are fixed on the upper supporting frame by
softening or melting of the the thermoplastic material such that
the porous bridge is extended over the pair of the apertures.

## BACKGROUND OF THE INVENTION

### Field of the Invention

This invention relates to a device for potentiometrically measuring ionic activity (or concentration) of an ion contained in aqueous liquid samples, for example, body fluids (e.g., whole blood, blood plasma, blood serum, and urine), liquor, bevarages, and drinking water.

### Description of the Prior Art

A slide-like device which can be used to measure ionic activity of an ion contained in an aqueous liquid sample spotted thereon is disclosed in, for example, U.S. Patent No. 4,437,970 and Japanese Unexamined Patent Publication No. 59(1984)-30055.

In general, such a device comprises at least one pair of ion-selective electrodes each of which has an ion-selective outermost layer corresponding to a specific ion, a pair of upper and lower supporting frames supporting the ion-selective electrodes therebetween, at least one pair of apertures for liquid-spotting formed in the upper supporting frame leading to the respective ion-selective electrodes, and at least one porous bridge (e.g., spun fibrous yarn) disposed on the upper supporting frame which can achieve an electrical conduction (i.e., liquid junction) between a sample solution spotted on one of a pair of the apertures and a reference solution spotted on the other.

This kind of device has been regarded as epoch-making owing to its excellent handiness. However, since

- 2 -

0164133

the porous bridge has been adhered to the upper supporting frame by means of a double-sided adhesive tape or the like, adhesives tend to soak into the porous bridge, thereby preventing the sample solution and/or the reference solution from diffusing into the bridge. Accordingly, it often takes a long time to achieve sufficient liquid conjunction and sometimes becomes impossible to conduct the measurement. Also, the adhesion between the porous bridge and the upper supporting frame tends to becomes so weak that they may be separated from each other during handling.

### SUMMARY OF THE INVENTION

It is thus an object of the present invention to provide a device for measuring ionic activity with high accuracy which is easy to handle.

More specifically, it is an object of the present invention to provide a device for measuring ionic activity in which the liquid conjunction between the sample and reference solutions is rapidly achieved.

It is another specific object of the present invention to provide a device for measuring ionic activity in which the porous bridge is securely adhered to the upper supporting frame.

The device for measuring ionic activity in accordance with the present invention is characterized in that the upper supporting frame is made of a thermoplastic material and that both ends of the porous bridge are fixed on the upper supporting frame by softening or melting of

- 3 -

the thermoplastic material such that the porous bridge is extended over a pair of the apertures for liquid-spotting.

In accordance with the present invention, not only a part of the upper supporting frame but also the both ends of the porous bridge may be softened or melted. Alternatively, chips of thermoplastic material may be provided and then softened or melted to fix the porous bridge on the upper supporting frame. In any event, the porous bridge may be fixed on the upper supporting frame as being united with the latter, or as being in contact with the latter, or as being surrounded by a part of the latter.

The thermoplastic material can be softened or melted by heating it from either outside (e.g., by means of heaters, infrared rays, laser beam radiation, etc.) or inside (e.g., by means of ultrasonic waves, high frequency, etc.). Among these means, heaters and ultrasonic waves are preferably used.

Any thermoplastic material, for example, such thermoplastic polymers as polystyrene, polyethylene and polyvinylchloride can be used for forming the upper supporting frame in accordance with the present invention as long as it is substantially inactive to the sample and reference solutions and can be softened or melted to fix the porous bridge thereon.

According to the present invention, since the porous bridge in which the sample and reference solutions come into contact with each other is fixed on the upper

- 4 -

0164133

supporting frame without any adhesive, there is no possibility that any adhesive may mingle in the sample solution or the reference solution. Therefore, sufficient liquid conjunction between these solutions can be achieved in a very short time, whereby ensuring highly accurate measurements of ionic activity. Also, the device in accordance with the present invention can be handled easily since the porous bridge thereof is fixed more firmly than that of the conventional devices using adhesives.

BRIEF DESCRIPTION OF THE DRAWINGS

Figure 1 is an exploded perspective view of an embodiment of the device for measuring ionic activity in accordance with the present invention,

Figure 2 is an unexploded perspective view thereof,

Figure 3 is a perspective view of another embodiment of the device in accordance with the present invention,

Figure 4 is an exploded perspective view of further embodiment of the device in accordance with the present invention,

Figure 5 is an unexploded perspective view thereof, and

Figure 6 is a perspective view of another embodiment of the device in accordance with the present invention.

DESCRIPTION OF THE PREFERRED EMBODIMENTS

The preferred embodiments of the present invention will hereinbelow be described with reference to the accompanying drawings.

- 5 -

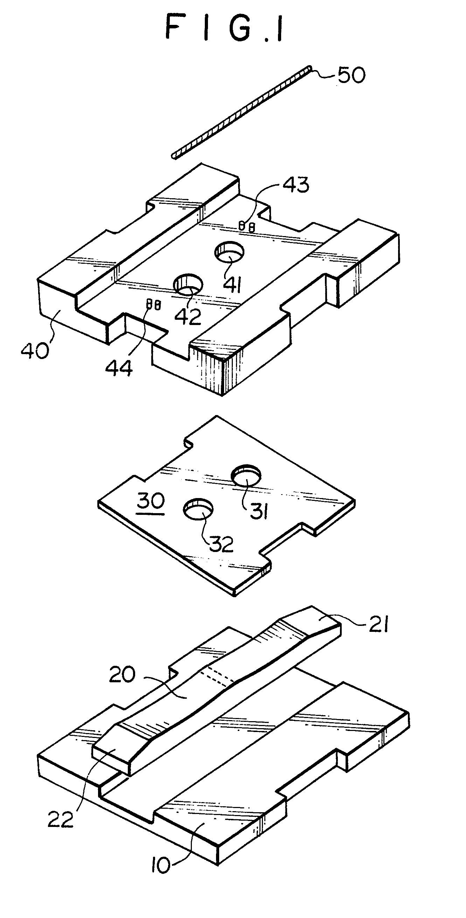

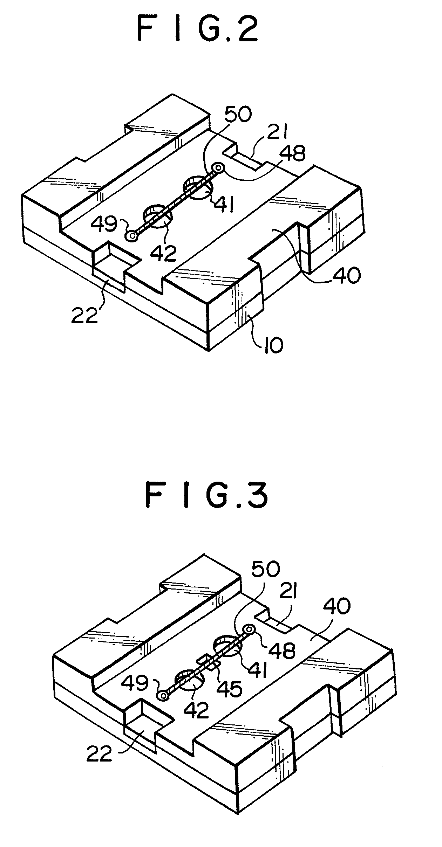

Figures 1 and 2 are respectively exploded and unexploded perspective views of an embodiment of the device for measuring ionic activity in accordance with the present invention. The device comprises a lower supporting frame 10; a pair of ion-selective electrodes 20 comprising identical ion-selective electrodes 21 and 22 which are electrically insulated from each other by a scratch or groove; a water-impervious layer 30 having adhesive coatings on both faces thereof and provided with a pair of through holes 31 and 32 (which also functions to prevent short-circuiting caused by liquids leaking out from peripheries of liquid-spotting apertures); an upper supporting frame 40 having a couple of apertures for liquid-spotting 41 and 42, and a couple of protruded portions 43 and 44; and a porous bridge 50 (preferably comprising spun yarn made of polyethyleneterephthalate fibers).

The protruded portions 43 and 44 are opposing to each other sandwiching said couple of apertures 41 and 42 therebetween. Each of the protruded portions 43 and 44 comprises a couple of projections confronting each other having a gap therebetween which corresponds to the diameter of the porous bridge 50. The porous bridge 50 is fixed on the upper supporting frame 40 by positioning the both ends of the porous bridge 50 at the respective gaps within the protruded portions 43 and 44, and then pressing thereon a welding head connected to a heat source or ultrasonic source so that the both ends of the porous

- 6 -

bridge 50 are sealed to the respective protruded portions 43 and 44. The protruded portions 43 and 44 may preferably be located at positions deviated from extensions of the line connecting the centers of a couple of the apertures 41 and 42, whereby reducing splashes from the porous bridge and preventing the porous bridge from being damaged by a pointed end of such a liquid supplier as a micropipette during spotting of liquid.

Figure 3 is a perspective view of another embodiment of the device in accordance with the present invention. This device is basically the same as that of the foregoing embodiment but further comprising a concave portion 45 between the couple of apertures 41 and 42, whereby preventing capillary action of liquid between the porous bridge 50 and the upper supporting frame 40. Since the sample and reference solutions respectively spotted on the couple of apertures 41 and 42 can mingle with each other due to the capillary action, it is preferable that such means as this concave portion is provided with the device so as to eliminate the capillary action between the bridge and frame.

The function of the device shown in Figures 1 and 2 will be described hereinbelow.

When one or more droplets of a reference solution containing an ion of a known ionic activity (or concentration) and one or more droplets of a sample solution in which the ionic activity of said ion is unknown are respectively

- 7 -

spotted on the couple of apertures 41 and 42, the reference solution reaches, via the through hole 31 in the water-impervious layer 30, one electrode 21 of the pair of ion-selective electrodes 20 which generate potential corresponding to the ionic activity of said ion, while the sample solution reaches the other electrode 22 via the through hole 32. On the other hand, both solutions penetrate through the porous bridge 50 so that their interfaces meet at the vicinity of the center of the bridge, thereby forming an electrical conduction therebetween. As a result, the potential difference corresponding to the difference in ionic activity of said ion between the reference and sample solutions is generated between the pair of ion-selective electrodes 21 and 22. The ionic activity of said ion is obtained by measuring said potential difference and then referring thus measured potential difference to a calibration curve previously formulated in accordance with the ionic activity of said ion contained in the reference solution on the basis of Nernst's equation.

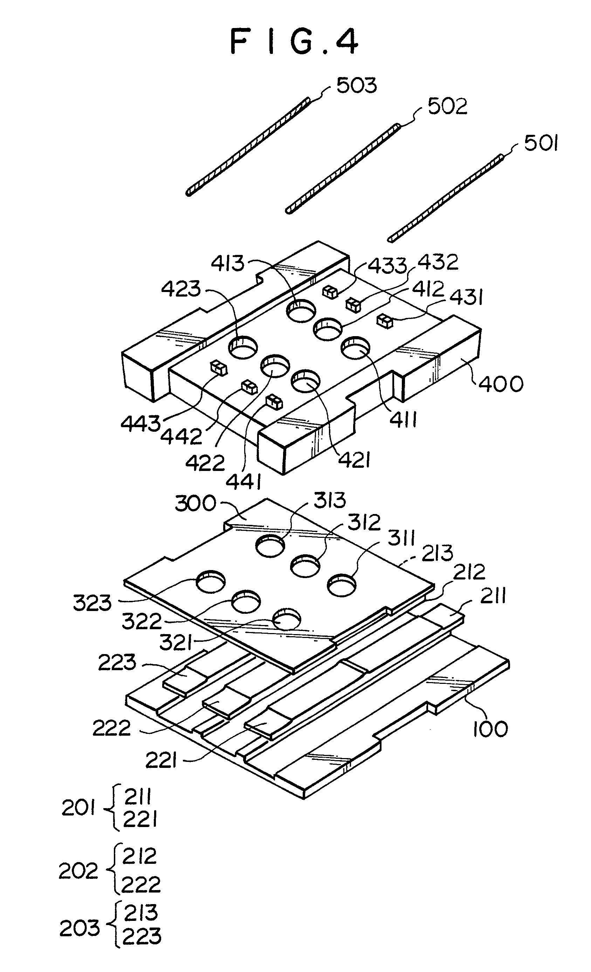

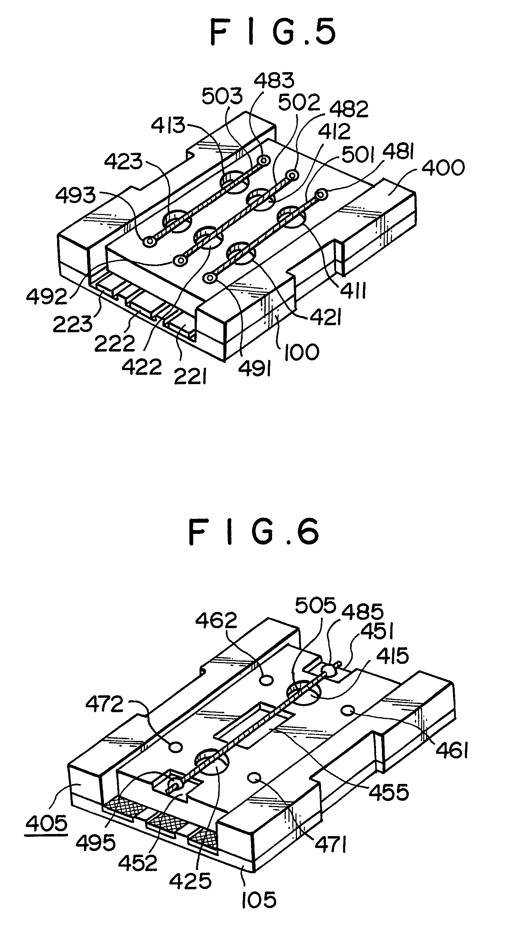

Figures 4 and 5 are respectively exploded and unexploded perspective views of an embodiment of the device in accordance with the present invention in which the ionic activity of three kinds of ions can be measured. This device comprises a lower supporting frame 100; three pairs of ion-selective electrodes 201, 202, and 203, respectively comprising couples of identical ion-selective electrodes 211 and 221, 212 and 222, and 213 and 223;

- 8 -

0164133

a water-impervious layer 300 having adhesive coatings on both faces thereof and provided with through holes 311, 312, 313, 321, 322, and 323; an upper supporting frame 400 having apertures for liquid-spotting 411, 412, 413, 421, 422, and 423, and protruded portions 431, 432, 433, 441, 442, and 443; and porous bridges 501, 502, and 503.

In this embodiment, each pair of the protruded portions are disposed with the corresponding pair of the apertures in the same manner as the aforesaid embodiment shown in Figures 1 and 2. Each protruded portion comprises a trapezoidal projection having a wedge- or U-like ditch corresponding to the diameter of the porous bridge at its center. Each porous bridge is fixed on the upper supporting frame 400 by positioning the both ends of each porous bridge at the respective ditches of each pair of protruded portions, and then softening or melting the protruded portions in the same manner as the previously mentioned embodiment.

In this device, each pair of the ion-selective electrode has a different ion-selectivity, for example, the pairs 201, 202, and 203 for $Na^+$, $K^+$, and $Cl^-$, respectively. In this case, for example, one or more droplets of a reference solution containing $Na^+$, $K^+$, and $Cl^-$ of a known ionic activity is spotted on the apertures 411, 412, and 413 and one or more droplets of a sample solution is spotted on the apertures 421, 422, and 423 so as to determine the ionic activity of said ions.

The reference and sample solutions penetrate the porous bridges so that their interfaces meet within each bridge. Accordingly, the potential difference corresponding to the difference in ionic activity of $Na^+$, $K^+$, and $Cl^-$ between the reference and sample solutions generate between the respective pairs of ion-selective electrodes 211 and 221, 212 and 222, and 213 and 223. Thus, the ionic activity of these three kinds of ions contained in the sample solution can be measured simultaneously, successively, or arbitrarily.

Figure 6 is a perspective view of another embodiment of the device in accordance with the subject invention.

This device has a lower supporting frame 105 and an upper supporting frame 405 in which a pair of apertures for liquid-spotting 415 and 425, two pairs of vent apertures 461 and 471, and 462 and 472, and concave portions 451, 452, and 455 are formed. The both ends of a porous bridge (spun yarn bridge) 505 are fixed to protruded portions 485 and 495 disposed on the concave portions 451 and 452, respectively, which are opposing each other sandwiching a pair of the apertures 415 and 425. Except for the upper supporting frame 405, the device is constructed in the same manner as those disclosed in U.S. Patent No. 4,437,970 and Japanese Patent Application No. 59(1984)-11744. Therefore, if only droplets of reference and sample solutions are respectively spotted on a pair of the apertures 415 and 425, both solutions are distributed to each pair of the ion-selective electrodes by way of porous members (not shown) disposed upon the ion-selective electrodes, thereby enabling measurements of three kinds of ions by using the single porous bridge 505. The capillary action between the porous bridge 505 and the surface of the upper supporting frame 405 at the time of liquid conjunction is eliminated by the concave portions 451, 452, and 455.

The foregoing embodiments can be charged in various ways without deviating from the scope of the present invention.

For example, the water-impervious layers 30 and 300 which are disposed to prevent liquid from leaking into the ion-selective electrodes from peripheries of the apertures for liquid-spotting as well as to fix the ion-selective electrodes between the upper and lower supporting frames can be omitted. On the other hand, an unplasticized adhesive layer, for example, a hot-melt adhesive layer (having apertures corresponding to the through holes of the water-impervious layer), may be applied to a surface of the water-impervious layer facing the ion-selective electrodes so as to fix the electrodes more securely and prevent liquid (the reference or sample solution) from leaking out from peripheries of the apertures more efficiently. Such an unplasticized adhesive layer may be united with the water-impervious layer.

Though the protruded portions are preferably formed on the upper supporting frame so as to securely fix the porous bridge thereon, they can also be omitted. Further, the form of the protruded portion is not restricted by the foregoing embodiments.  Without any protruded portion, the porous bridge may be fixed on a flat portions of the surface of the upper supporting frame made of a thermoplastic material.  Also, the porous bridge can be fixed on the upper supporting frame with chips or rods of thermoplastic material externally provided. The porous bridge (spun yarn bridge) may be formed of either thermoplastic or other materials.

C L A I M S

1. A device for measuring ionic activity comprising a lower supporting frame, at least one pair of ion-selective electrodes disposed on said lower supporting frame, an upper supporting frame made of a thermoplastic material having at least one pair of apertures for liquid-spotting leading to the respective ion-selective electrodes, and at least one porous bridge for effecting an electrical conduction between a sample solution spotted on one of said pair of apertures for liquid-spotting and a reference solution spotted on the other, both ends of said porous bridge being fixed on said upper supporting frame by softening or melting of the thermoplastic material such that said porous bridge is extended over said pair of apertures for liquid-spotting.

2. A device for measuring ionic activity as defined in Claim 1 wherein said softening or melting of the thermoplastic material is effected by means of a heater.

3. A device for measuring ionic activity as defined in Claim 1 wherein said softening or melting of the thermoplastic material is effected by means of ultrasonic waves.

4. A device for measuring ionic activity as defined in Claim 1 wherein at least one pair of protruded portions are formed on said upper supporting frame, said pair of protruded portions sandwiching said pair of apertures for liquid-spotting therebetween, and the both ends of said porous bridge are fixed with the respective protruded portions.

- 13 -

5. A device for measuring ionic activity as defined in Claim 4 wherein said pair of protruded portions are located at positions deviated from extensions of the line connecting the centers of said pair of apertures.

6. A device for measuring ionic activity as defined in Claim 1 wherein said porous bridge is fixed on said upper supporting frame with chips of the thermoplastic material.

7. A device for measuring ionic activity as defined in Claim 1 wherein said upper supporting frame has a concave portion formed between said pair of apertures for liquid-spotting.

8. A device for measuring ionic activity as defined in Claim 1 further comprising a water-impervious layer having through holes corresponding to said pair of apertures for liquid-spotting disposed between said upper supporting frame and said pair of ion-selective electrodes.

9. A device for measuring ionic activity as defined in Claim 8 wherein the lower surface of said water impervious layer is coated with an unplasticized adhesive.

# F I G .I

50

43

41

42

40

44

30

31

32

21

20

22

10

# FIG.2

# FIG.3

# F I G . 4

# F I G.5

# F I G.6